# EUROPÄISCHE PATENTSCHRIFT

(11) **EP 2 994 657 B1**
(45) Veröffentlichungstag und Bekanntmachung des Hinweises auf die Patenterteilung: **20.12.2017**
(21) Anmeldenummer: 14722531.2
(22) Anmeldetag: 14.03.2014
(51) Int. Cl.: F16C 33/66

(54) **FETTGESCHMIERTES SCHRÄGKUGELLAGER**
GREASE-LUBRICATED ANGULAR CONTACT BALL BEARING
ROULEMENT À BILLES À CONTACT OBLIQUE LUBRIFIÉ À LA GRAISSE

(30) Priorität: 08.05.2013 DE 102013208518
(43) Veröffentlichungstag der Anmeldung: 16.03.2016
(73) Patentinhaber: Schaeffler Technologies AG & Co. KG, 91074 Herzogenaurach (DE)
(72) Erfinder: PAUSCH, Michael, 97456 Dittelbrunn (DE); LAUGISCH, Gabriele, 97440 Werneck (DE); MITCHELL, Christopher, St. AustellPL25 4JF (GB)
(86) Internationale Anmeldenummer: PCT/DE2014/200124
(87) Internationale Veröffentlichungsnummer: WO 2014/180473

(56) Entgegenhaltungen:
- EP-A1- 1 039 160
- DE-A1-102005 052 677
- JP-A- 2003 232 366
- US-A- 2 217 801

## Beschreibung

### Gebiet der Erfindung

Die Erfindung betrifft ein auf Fettschmierung geeignetes, insbesondere als Spindellager verwendbares Schrägkugellager.

### Hintergrund der Erfindung

Ein fettgeschmiertes Schrägkugellager für mit hohen Drehgeschwindigkeiten betriebene Spindelvorrichtungen ist beispielsweise aus der DE 102 35 239 B4 bekannt. Dieses Schrägkugellager weist in seinem Außenring ein Schmierfett-Zuführungselement auf, welches mit den Wälzkörpern, d. h. Kugeln, überlappt und zur Nachschmierung nutzbar ist. Die Menge des bei einer Nachschmierung zu verwendenden Schmierfetts soll mindestens 0,1 % und höchstens 4 % des Raumvolumens des Schrägkugellagers betragen. Eine Nachschmierung soll erfolgen, wenn noch nicht mehr als die Hälfte der Lebensdauer des ursprünglich eingefüllten Schmierfettes verbraucht ist.

Aus der DE 37 13 814 C2 ist ein Wälzlager bekannt, welches durch einen den Außenring durchdringenden Schmierkanal hindurch mit Schmierfett nachschmierbar ist. Der Außenring ist hierbei in ein Gehäuse eingesetzt, in welchem sich ein Schmiemippel befindet Unter Druck stehendes Schmierfett kann in den Schmiemippel eingeleitet werden, wobei es einen durch Federkraft belasteten Arretierstift verschiebt. Ist der Druck des Schmierfetts innerhalb des Wälzlagers zu groß, so verhindert der Arretierstift die Zuführung zusätzlichen Schmierfetts. Auf diese Weise sollen Dichtungen des Wälzlagers vor Überbeanspruchung geschützt werden.

Aus der JP 2003-232366 A ist ein weiteres Wälzlager bekannt welches einen schräg gestellten Schmierfett-Zuführkanal gegenüber der Radialebene des Außenrings des Schrägkugellagers aufweist, wobei eine Flächennormale der Radialebene des Außenrings zu dessen Mittelachse parallel ist. Diese Schrägstellung hat den Vorteil, dass ein wesentlicher Teil des Schmierfett-Zuführkanals innerhalb des Außenrings in einem Bereich verlaufen kann, welcher eine gegenüber anderen Bereichen erhöhte Wandstärke aufweist. Die mechanische Belastbarkeit des Außenrings ist damit gegenüber Schrägkugellagern ohne Nachschmieröffnung im Außenring höchstens unwesentlich herabgesetzt.

### Aufgabe der Erfindung

Der Erfindung liegt die Aufgabe zu Grunde, ein Schrägkugellager, insbesondere Spindellager, welches für Fettschmierung geeignet ist, gegenüber dem genannten Stand der Technik hinsichtlich der Eignung sowohl für hohe mechanische Belastungen als auch hohe Drehzahlen weiter zu entwickeln.

### Beschreibung der Erfindung

Diese Aufgabe wird erfindungsgemäß gelöst durch ein Schrägkugellager mit den Merkmalen des Anspruchs 1.

Das Schrägkugellager weist in an sich bekannter Weise mehrere Lagerringe, nämlich mindestens einen Innenring und mindestens einen Außenring, auf, zwischen welchen Kugeln als Wälzkörper abrollen. Jede Kugel kontaktiert die Lagerringe derart, dass die durch die Kugel laufende Drucklinie schräg zur Radialebene des Lagers verläuft. Die Radialebene ist eine mittig durch das Lager verlaufende normal zur Rotationsachse des Lagers angeordnete Ebene

Das Schrägkugellager kann ein- oder mehrreihig aufgebaut sein. In jedem Fall ist ein Schmierfett-Zuführkanal von der Mantelfläche des Außenrings oder eines der Außenringe zum Innenraum des Lagers gerührt, wobei die innenseitige Öffnung des Schmierfett-Zuführkanals in Axialrichtung etwas gegenüber dem durch die Wälzkörper beschriebenen Teilkreis, das heißt dem durch die Mittelpunkte aller Kugeln verlaufenden Kreis, versetzt ist. Der Versatz in Axialrichtung des Kugellagers ist in bevorzugter Ausgestaltung derart gering, dass die Öffnung des Schmierfett-Zuführkanals auf der Innenseite des Außenrings mit den Wälzkörpern überlappt. Mit anderen Worten: Die Öffnung des Schmierfett-Zuführkanales auf der Innenseite des Außenrings ist um einen Betrag, der kleiner als der Radius der Kugeln ist, in Axialrichtung des Schrägkugellagers gegenüber dem Teilkreis der Kugeln versetzt. Erfindungsgemäß ist der Schmierfett-Zuführkanal gleichsinnig mit der durch den Wälzkörper verlaufenden Drucklinie gegenüber der Radialrichtung des Schrägkugellagers geneigt. Der Schrägstellungswinkel des Schmierfett-Zuführkanals gegenüber der normal zur Wälzlagerachse angeordneten Radialebene beträgt vorzugsweise mindestens 2° und höchstens 25°. Diese Neigung hat den Vorteil, dass das Schmierfett innerhalb des Lagerinnenraums an einer schmierungstechnisch günstigen Stelle freigesetzt wird. Die Schrägstellung des Schmierfett-Zuführkanals hat hierbei den besonderen Vorteil, dass Schmiermittel teilweise in Tangentialrichtung auf die Oberfläche der Kugel gelangt und von dort aus auch bei geringsten Nachschmiermengen gleichmäßig weiter verteilt wird. Dies gilt sowohl in Fällen, in denen der Schmierfett-Zuführkanal und die Drucklinie gleichsinnig geneigt sind, als auch in Fällen, in denen der Schmierfett-Zuführkanal und die Drucklinie gegensinnig zueinander geneigt sind Beispielsweise liegt der genannte Schrägstellungswinkel des Schmierfett-Zuführkanals zwischen 5° und 20°. Insbesondere kann der Schmierfett-Zuführkanal gegenüber der Radialebene des Außenrings und damit des gesamten Schrägkugellagers um mindestens 5° und höchstens 10° schräggestellt sein. In besonders bevorzugten Ausführungsformen beträgt der Schrägstellungswinkel des Schmierfett-Zuführkanals gegenüber der Radialebene des Außenrings mindestens 7° und höchstens 8°. Der Schmierfett-Zuführkanal weist in bevorzugter Ausgestaltung nur eine einzige Mittenachse auf. Es handelt sich somit um einen geraden Kanal; ein Knick innerhalb des Schmierfett-Zuführkanals im Außenrings ist nicht vorgesehen.

Sofern mehrere Schmierfett-Zuführöffnungen im Außenring angeordnet sind, können diese gleichmäßig oder ungleichmäßig am Umfang des Außenrings angeordnet sein Im Fall einer ungleichmäßigen Anordnung der Schmierfett-Zufuhröffnungen sind vorzugsweise in desjenigen Winkelbereichen des Außenrings mehr Schmierfett-Zuführöffnungen pro Winkeleinheit angeordnet, in denen beim Betrieb des Schrägkugellagers die geringere mechanische Belastung im Vergleich zu anderen Winkelbereichen zu erwarten ist. Während aufgrund der Schrägstellung jeder Schmierfett-Zuführöffnung eine ausreichende, gleichmäßige Schmiermittelversorgung des Schrägkugellegers unabhängig von der Winkelverteilung der Schmierfett-Zuführöffnungen gegeben ist, ist die durch die Schmierfett-Zuführöffnungen unvermeidbar gegebene, wenn auch sehr geringe mechanische Schwächung des Außenrings hierbei gezielt in Umfangsbereiche mit relativ geringer mechanischer Belastung gelegt Winkelbereiche unterschiedlicher mechanischer Belastung können beispielsweise aus vom Schrägkugellager aufzunehmenden Gewichtskräften von Maschinenteilen resultieren.

Die Schmierfett-Zuführöffnung endet außenseitig vorzugsweise in einer umlaufenden Schmiermittelnut des Außenrings. Zu den Stirnseiten des Außenrings hin kann die Schmiermittelnut durch Dichtungen, beilspielsweise O-Ring-Dichtungen, welche jeweils in eine Nut im Außenring eingelegt sind, abgedichtet werden. Aufgrund der Schrägstellung des Schmierfett-Zuführkanals kann die außenseitige Öffnung des Schmierfett-Zuführkanals mittig in der Schmiermittelnut enden, wobei die Schmiermittelnut vorzugsweise mittig oder annähernd mittig zwischen den beiden Stirnseiten des Außenrings angeordnet ist. Unter einer annähernd mittigen Anordnung der Schmiermittelnut im Außenring wird hierbei eine Anordnung verstanden, bei welcher die Mitte der Schmiermittelnut um höchstens 20%, beispielsweise um höchstens 15%, von der Mittel des Außenrings, zwischen dessen Stirnseiten gemessen, beabstandet ist.

Die zumindest annähernd mittige Anordnung der Schmiermittelnut in der Mantelfläche des Außenrings hat sowohl Vorteile hinsichtlich der Festigkeit des Außenrings als auch den Vorteil, dass im Vergleich zu Außenringen ohne Schmiermittelzuführung nur relativ geringe konstruktive Änderungen, beispielsweise was Kantengestaltungen an den Stirnseiten des Lagerrings betrifft, erforderlich sind.

Die Breite der Schmiermittelnut beträgt vorzugsweise mindestens 2 mm und höchstens 60 % der in Axialrichtung gemessenen Breite des Außenrings. Die von der Mantelfläche des Außenrings nach innen gemessene Tiefe der als Ringnut ausgebildeten Schmiermittelnut beträgt in bevorzugter Ausgestaltung mindestens 0,5 mm und höchstens das 1,5-fache der Breite der Ringnut. Der von der Ringnut ausgehende Schmierfett-Zuführkanal hat einen Durchmesser, der vorzugsweise mindestens 0,7 mm und höchstens die Hälfte der Breite der Ringnut, das heißt Schmiermittelnut, beträgt.

Die Schmiermittelnut weist beispielsweise eine kreisbogenförmige Kontur, insbesondere einen halbkreisförmigen Querschnitt, auf. Abweichend hiervon sind beispielsweise auch polygonale Querschnittsgestaltungen der Schmiermittelnut möglich. Der Schmierfett-Zuführkanal weist im einfachsten Fall eine zylindrische Wandung auf. Vorteile hinsichtlich der Überleitung von Schmiermittel von der Schmiermittelnut in den Schmierfett-Zuführkanal sind in aufwendigeren Ausführungsformen beispielsweise erzielbar, in dem die in Tangentialrichtung der Schmiermittelnut gemessene Weite des Schmierfett-Zuführkanals größer als dessen orthogonal hierzu, also in Axialrichtung des Schrägkugellagers, gemessene Weite ist. Eine Erhöhung der Zuführgeschwindigkeit des Schmiermittels am inneren Ende des Schmierfett-Zuführkanals ist erreichbar, indem sich der Schmierfett-Zuführkanal nach innen kontinuierlich oder gestuft verjüngt. Insbesondere sind Ausführungsformen realisierbar, in denen der Schmierfett-Zuführkanal einen nicht kreisförmigen und längs seiner Erstreckung nicht konstanten Querschnitt aufweist.

### Kurze Beschreibung der Zeichnungen

Nachfolgend werden mehrere Ausführungsbeispiele der Erfindung anhand einer Zeichnung näher erläutert Hierin zeigen;

### Ausführliche Beschreibung der Zeichnungen

- Fig. 1: in einer Schnittdarstellung ein für Fettschmierung vorgesehenes Schrägkugellager,
- Fig. 2 - 5: verschiedene Beispiele von Außenringen für fettgeschmierte Schrägkugellager,
- Fig. 6 - 10: verschiedene Details, nämlich Schmiermittelnuten, von Außenringen fettgeschmierter Schrägkugellager,
- Fig. 11 -13: verschiedene Querschnittsgestaltungen von SchmierfettZuführkanälen in Außenringen fettgeschmierter Schrägkugellager,
- Fig. 14-16: Schmierfett-Zuführkanäle mit längs ihrer Erstreckung unterschiedlicher Gestaltung.

Einander entsprechende oder gleichwirkende Teile sind in allen Figuren mit den gleichen Bezugszeichen gekennzeichnet.

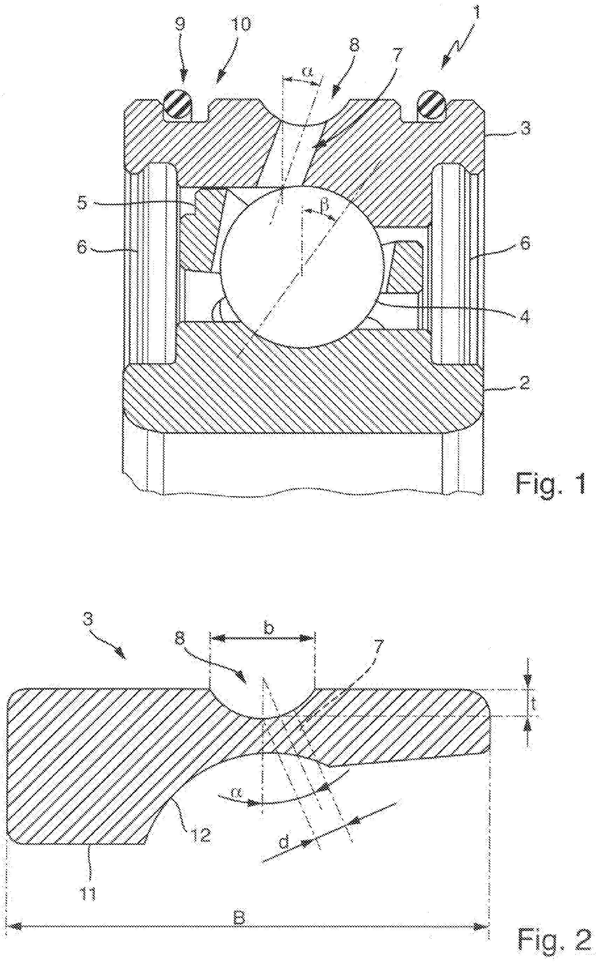

Ein in Fig. 1 insgesamt mit den Bezugszeichen 1 gekennzeichnetes Schrägkugellager, nämlich Spindellager, hinsichtlich dessen prinzipieller Funktion auf den eingangs zitierten Stand der Technik verwiesen wird weist zwei Lagerringe 2.3, nämlich einen Innenring 2 und einen Außenring 3 auf, zwischen welchen Kugeln 4 als Wälzkörper abrollen Die Kugeln 4 sind mittels eines Käfigs 5 geführt. Stirnseitig ist das Schrägkugellager 1 durch jeweils eine Dichtung 6 abgedichtet. Die Schmierung des Schrägkugellagers 1 verfolgt mit Schmierfett,

Zur Nachschmierung des Schrägkugellagers 1 ist ein im Außenrings 3 angeordneter Schmierfett-Zuführkanal 7 vorgesehen, welcher gegenüber der Radialebene des Schrägkugellagers 1 um einen Winkel α schräg gestellt ist. Sämtliche Mittelpunkte der Kugeln 4 des als einreihiges Wälzlager ausgebildeten Schrägkugeltagers 1 liegen in der genannten Radialebene,

Der Schmierfett-Zuführkanal 7 endet innenseitig radial außerhalb der Kugeln 4, neben einer durch den Außenring 3 bereitgestellten Laufbahn, welche den Kontaktbereich zwischen den Kugeln 4 und dem Außenring 3 bildet. Die Mittelachse des Schmierfett-Zuführkanals 7 ist am innenseitigen Ende des Schmierfett-Zuführkanals 7 gegenüber der durch die Mittelpunkte der Kugeln 4 gelegten Radialebene in Axialrichtung des Schrägkugellagers 1 zur dünnwandigeren, in der Anordnung nach Figur 1 linken Stirnseite des Schrägkugellagers 1 hin versetzt. Dagegen schneidet die Mittelachse des Schmierfett-Zuführkanals 7 an dessen radial äußerem Ende, welches in einer Schmiermittelnut 8 liegt, die genannte, durch die Mittelpunkte der Kugeln 4 verlaufende Ebene. Die Mittelachse des Schmierfett-Zuführkanals 7, das heißt eine zentrisch durch den Schmierfett-Zuführkanal 7 gelegte Gerade, schneidet die mit der Symmetrieachse der Lagerringe 2.3 identische Rotationsachse des Schfägkugellagers 1.

Ebenso wie die außenseitige Öffnung des Schmierfett-Zuführkanals 7 ist auch die gesamte Schmiermittelnut 8 zentrisch an der Mantelfläche des Außenrings 3 angeordnet. Bei der Nachschmierung des Schrägkugellagers 1, weiche kontinuierlich oder in beliebigen Zeitabständen erfolgen kann, wird Schmierfett der Schmiermittelnut 8 zugeführt. Zur stirnseitigen Abdichtung der Schmiermittelnut 8 sind zwei O-Ringe 9 in jeweils eine Nut 10, welche in die Mantelfläche des Außenrings 3 eingebracht ist, eingelegt. Eine durch die Kugel 4, welche beispielsweise aus Stahl oder Keramik gefertigt sein kann, verlaufende Drucklinie schließt mit der Radialrichtung des Schrägkugellagers 1 einen Druckwinkel β ein, der kleiner als 45° ist.

Abmessungen des Schmierfett-Zuführkanals 7 sowie der Schmiermittelnut 8 werden im Folgenden anhand Figur 2, die einen Außenring 3 eines nicht weiter dargestellten Schrägkugellagers 1 zeigt, erläutert, Die Breite b der Schmiermittelnut 8 beträgt mindestens 2 mm und höchstens 60 % der zwischen dessen Stirnseiten gemessenen Breite B des Außenrings 3. Die mit t bezeichnete Tiefe des Schmierfeft-Zuführkanals 7 beträgt mindestens 0,5 mm und höchstens das 1.5-fache des Breite b der Schmiermittelnut 8, Der Schmierfett-Zuführkanal 7 weist einen im Beispiel nach Figur 2 konstanten Durchmesser d auf, welcher mindestens 0,7 mm und höchstens die Hälfte der Breite b der Schmiermittelnut 8 beiträgt. Der Schrägstellungswinkel α des Schmierfett-Zuführkanals 7 beträgt mindestens 5°. Wie im Ausführungsbeispiel nach Figur 1 weist auch im Ausführungsbeispiel nach Figur 2 die Schmiermittelnut 8 im Querschnitt eine kreisbogenförmige Kontur auf. Im Unterschied zum Ausführungsbeispiel nach Figur 1 endet im Ausführungsbeispiel nach Figur 2 der Schmierfett-Zuführkanal 7 jedoch außermittig in der Schmiermittelnut 8.

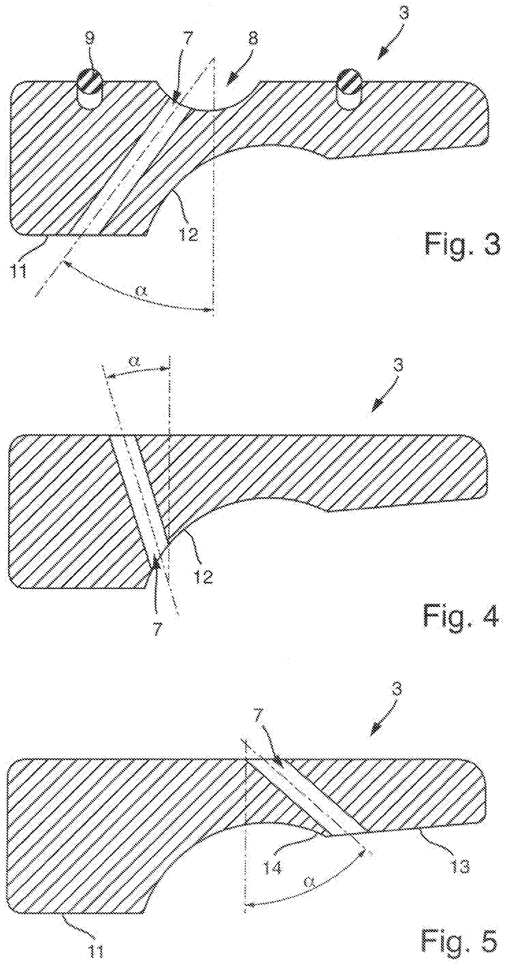

Die Figur 3 zeigt einen Sonderfall eines schräg durch einen Außenring 3 verlaufenden Schmierfett-Zuführkanals 7. Der Schmierfett-Zuführkanal 7 endet in diesem Fall auf seiner Innenseite nicht direkt bei den Kugeln 6. sondern an der inneren Mantelfläche eines auch als Lagerschulter bezeichneten Bordes 11 des Außenrings 3. Eine solche Schmiermittelversorgung des Bordes 11 kann zusätzlich zu der in den Figuren 1 und 2 gezeigten Schmiermittelversorgung der Kugeln 4 vorgesehen sein

Im Ausführungsbeispiel nach Figur 4 ist ebenso wie im Ausführungsbeispiel nach Figur 3 der Bord 11 des Außenrings 3 im Vergleich zu den übrigen Abschnitten des Außenrings 3 besonders stark ausgeführt. Im Ausführungsbeispiel nach Figur 4 wird unmittelbar eine Laufbahn 12 des Außenrings 3, auf welcher die Kugeln 4 abrollen mit Schmiermittel, nämlich Fett, versorgt. In nicht dargestellter Weise kann auch der Außenring 3 nach Figur 4 in seiner Mantelfläche eine Schmiermittelnut 8 aufweisen. Ebenso ist es möglich, das Schmiermittel durch ein nicht dargestelltes Gehäuse hindurch nur an einzelnen Punkten, nämlich an den außenseitigen Öffnungen von Schmierfett- Zuführkanälen 7. zum Außenring 3 zuzuführen wobei in diesem Fall eine Verdrehsicherung des Außenrings 3 vorhanden sein muss.

Im Ausführungsbeispiel nach Figur 5 endet der Schmierfett-Zuführkanal 7 innenseitig an einem Bord 13 des Außenrings 3, welcher auch als kleiner Bord bezeichnet wird und an eine Laufbahnüberhöhung 14 anschließt.

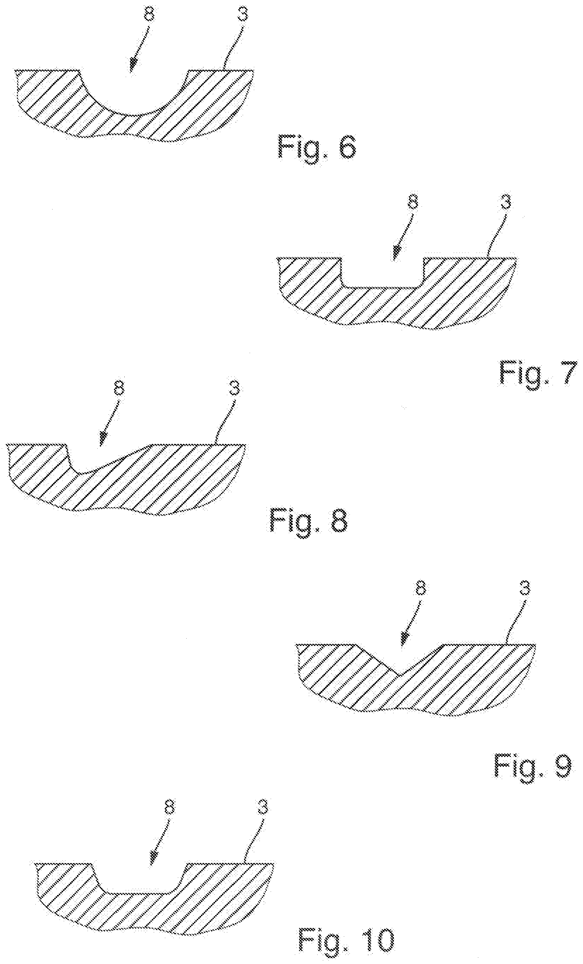

Die Figuren 6 bis 10 zeigen verschiedene Querschnittsgestaltungen der Schmiermittelnut 8, welche bei jedem der Ausführungsbeispiele nach den Figuren 1 bis 5 zum Einsatz kommen können. Im Einzelnen ist eine Kreisbogenform (Figur 6), eine Rechteckform (Figur 7), eine asymmetrisch dreieckige Form (Figur 8), eine symmetrische dreieckige Form (Figur 9), sowie eine Trapezform (Figur 10) gezeigt.

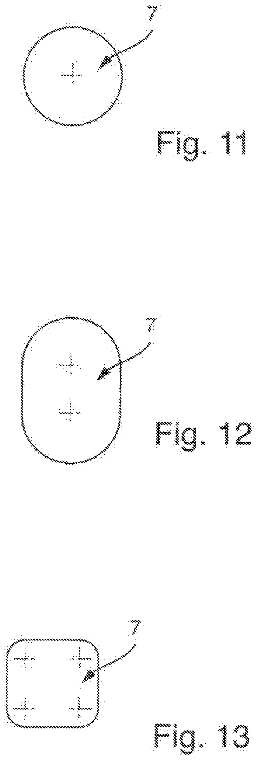

Die Figuren 11 bis 13 illustrieren mögliche Querschnittsformen des Schmierfett-Zuführkanals 7. Während Figur 11 einen kreisförmigen Querschnitt zeigt, weist der Schmierfett-Zuführkanal 7 nach Figur 12 die Querschnittsform eines Langlochs auf. Der Schmierfett-Zuführkanal 7 nach Figur 13 weist einen rechteckigen Querschnitt mit abgerundeten Ecken auf.

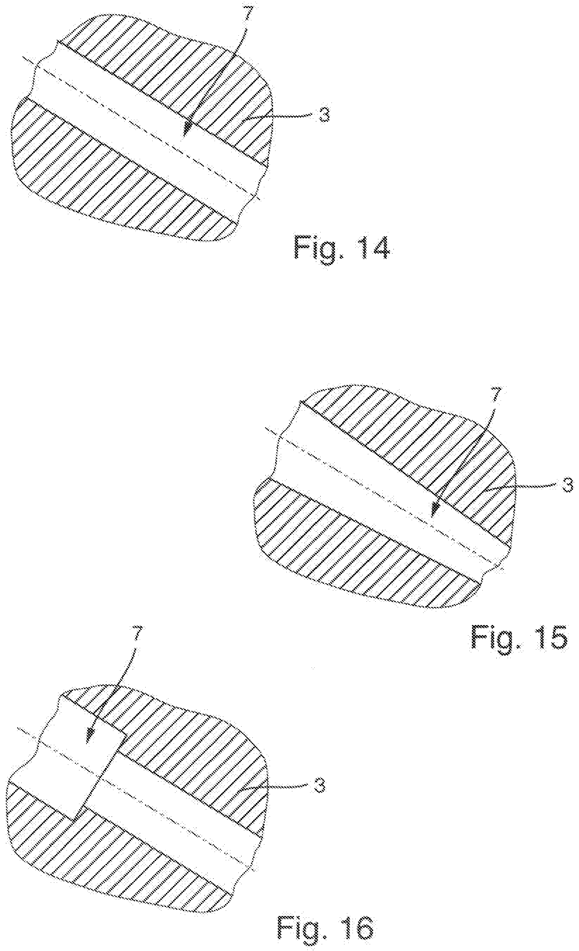

Die Figuren 14 bis 16 zeigen jeweils einen Längsschnitt eines Schmierfett-Zuführkanals 7, wobei dessen Querschnitt in jedem Fall jedem der drei Beispiele nach den Figuren 11 bis 13 entsprechen kann. Nach Figur 14 weist der Schmierfett-Zuführkanal 7 längs seiner Erstreckung einen konstanten Querschnitt auf. Dagegen haben die Schmierfett-Zuführkanäle 7 nach den Figuren 15 und 16 einen längs ihrer Erstreckung veränderlichen Querschnitt Während sich der Schmierfett-Zuführkanal 7 nach Figur 15 konisch nach innen, das heißt zum Innenraum des Schrägkugellagers 1 hin, verjüngt, ist der Schmierfett-Zuführkanal 7 nach Figur 16 als Stufenbohrung ausgeführt. Auch in diesem Fall ist das den geringeren Querschnitt aufweisende Ende des Schmierfett-Zuführkanals 7 dem Innenraum des Schrägkugellagers 1 zugewandt, während das den größeren Querschnitt aufweisende Ende des Schmierfett-Zuführkanals 7 am Außenumfang des Außenrings 3, insbesondere in einer Schmiermittelnut 8, angeordnet ist.

### Bezugszahlenliste

- 1: Schrägkugellager
- 2: Innenring
- 3: Außenring
- 4: Kugel
- 5: Käfig
- 6: Dichtung
- 7: Schmierfett-Zuführkanal
- 8: Schmiermittelnut
- 9: O-Ring
- 10: Nut
- 11: Bord
- 12: Laufbahn
- 13: Bord
- 14: Laufbahnüberhöhung

- α: Winkel
- β: Druckwinkel

- b: Breite der Schmiermittelnut
- B: Breite des Außenrings
- d: Durchmesser des Schmierfett-Zuführkanals
- t: Tiefe der Schmiermtttelnut

## Patentansprüche

1. Schrägkugellager, mit zwischen einem Innenring (2) und einem Außenring (3) angeordneten Kugeln (4), wobei der Außenring (3) einen gegenüber der Radialebene des Außenrings (3) geneigt angeordneten Schmierfett-Zuführkanal (7) aufweist, dessen außenseitige Öffnung in der äußeren Mantelfläche des Außenrings (3) angeordnet ist und dessen innere Öffnung am Innenumfang des Außenrings (3), zu einem durch die Mittelpunkte der Kugeln (4) beschriebenen Kreis in axialer Richtung des Innenrings (2) sowie des Außenrings (3) versetzt, angeordnet ist, **dadurch gekennzeichnet, dass** der Neigungswinkel der Mittelachse des Schmierfett-Zuführkanals (7) gegenüber der Radialebene des Außenrings (3) mindestens 2° sowie höchstens 25° beträgt.

2. Schrägkugellager nach Anspruch 1, **dadurch gekennzeichnet, dass** die Neigungsrichtung der Mittelachse des Schmierfett-Zuführkanals (7) gegenüber der Radialebene des Außenrings (3) der Neigungsrichtung der durch die Kugeln (4) gehenden Drucklinie entspricht.

3. Schrägkugellager nach einem der Ansprüche 1 bis 2, **dadurch gekennzeichnet, dass** der Schmiermittel-Zuführkanal (7) außenseitig in einer umlaufenden Schmiermittelnut (8) des Außenrings (3) endet.

4. Schrägkugellager nach Anspruch 3, **dadurch gekennzeichnet, dass** die außenseitige Öffnung des Schmiermittel-Zuführkanals (7) mittig in der Schmiermittelnut (8) angeordnet ist.

5. Schrägkugellager nach Anspruch 3 oder 4, **dadurch gekennzeichnet, dass** die Mitte der Schmiermittelnut (8) um höchstens 20% der Breite des Außenrings (3) von der Mitte des Außenrings (3) beabstandet ist.

6. Schrägkugellager nach einem der Ansprüche 3 bis 5, **dadurch gekennzeichnet, dass** die Breite (b) der Schmiermittelnut (8) mindestens 2 mm und höchstens 60 % der Breite (B) des Außenrings (3) beträgt.

7. Schrägkugellager nach einem der Ansprüche 3 bis 6, **dadurch gekennzeichnet, dass** die Tiefe (t) der Schmiermittelnut (8) mindestens 0,5 mm und höchstens das 1,5-fache der Breite (b) der Schmiermittelnut (8) beträgt.

8. Schrägkugellager nach einem der Ansprüche 3 bis 7, **dadurch gekennzeichnet, dass** der geringste Durchmesser (d) des Schmierfett-Zuführkahals (7) mindestens 0,7 mm und höchstens die Hälfte der Breite (b) der Schmiermittelnut (8) beträgt.

9. Schrägkugellager nach einem der Ansprüche 3 bis 8, **dadurch gekennzeichnet, dass** die Schmiermittelnut (8) eine kreisbogenförmige Kontur aufweist.

10. Schrägkugellager nach einem der Ansprüche 1 bis 9, **dadurch gekennzeichnet, dass** der Schmierfett-Zuführkanal (7) eine nicht zylindermantelförmige Wandung aufweist.

## Claims

1. Angular contact ball bearing having balls (4) arranged between an inner ring (2) and an outer ring (3), wherein the outer ring (3) has a lubrication grease supply channel (7) which is arranged inclined with respect to the radial plane of the outer ring (3) and of which the outer opening is arranged in the outer lateral surface of the outer ring (3) and the inner opening is arranged on the inner circumference of the outer ring (3), offset in the axial direction of the inner ring (2) and of the outer ring (3) with respect to a circle described by the midpoints of the balls (4), **characterized in that** the angle of inclination of the central axis of the lubrication grease supply channel (7), with respect to the radial plane of the outer ring (3), is at least 2° and at most 25°.

2. Angular contact ball bearing according to Claim 1, **characterized in that** the direction of inclination of the central axis of the lubrication grease supply channel (7), with respect to the radial plane of the outer ring (3), corresponds to the angle of inclination of the pressure line passing through the balls (4).

3. Angular contact ball bearing according to either of Claims 1 and 2, **characterized in that** the lubricant supply channel (7) ends outwardly in a circumferential lubricant groove (8) of the outer ring (3).

4. Angular contact ball bearing according to Claim 3, **characterized in that** the outer opening of the lubricant supply channel (7) is arranged centrally in the lubricant groove (8).

5. Angular contact ball bearing according to Claim 3 or 4, **characterized in that** the centre of the lubricant groove (8) is spaced apart from the centre of the outer ring (3) by at most 20% of the breadth of the outer ring (3).

6. Angular contact ball bearing according to one of Claims 3 to 5, **characterized in that** the breadth (b) of the lubricant groove (8) is at least 2 mm and at most 60% of the breadth (B) of the outer ring (3).

7. Angular contact ball bearing according to one of Claims 3 to 6, **characterized in that** the depth (t) of the lubricant groove (8) is at least 0.5 mm and at most 1.5 times the breadth (b) of the lubricant groove (8).

8. Angular contact ball bearing according to one of Claims 3 to 7, **characterized in that** the smallest diameter (d) of the lubrication grease supply channel (7) is at least 0.7 mm and at most half the breadth (b) of the lubricant groove (8).

9. Angular contact ball bearing according to one of Claims 3 to 8, **characterized in that** the lubricant groove (8) has a contour in the shape of an arc of a circle.

10. Angular contact ball bearing according to one of Claims 1 to 9, **characterized in that** the lubrication grease supply channel (7) has a non-cylindrical wall.

## Revendications

1. Roulement à billes à contact oblique, comprenant des billes (4) disposées entre une bague intérieure (2) et une bague extérieure (3), la bague extérieure (3) présentant un canal d'alimentation de graisse de lubrification (7) disposé de manière inclinée par rapport au plan radial de la bague extérieure (3), dont l'ouverture du côté extérieur est disposée dans la surface d'enveloppe extérieure de la bague extérieure (3) et dont l'ouverture intérieure est disposée au niveau de la périphérie intérieure de la bague extérieure (3), de manière décalée par rapport à un cercle décrit par les centres des billes (4) dans la direction axiale de la bague intérieure (2) et de la bague extérieure (3), **caractérisé en ce que** l'angle d'inclinaison de l'axe médian du canal d'alimentation de graisse de lubrification (7) par rapport au plan radial de la bague extérieure (3) vaut au moins 2° et au plus 25°.

2. Roulement à billes à contact oblique selon la revendication 1, **caractérisé en ce que** la direction d'inclinaison de l'axe médian du canal d'alimentation de graisse de lubrification (7) par rapport au plan radial de la bague extérieure (3) correspond à la direction d'inclinaison de la ligne de pression passant à travers les billes (4).

3. Roulement à billes à contact oblique selon l'une quelconque des revendications 1 à 2, **caractérisé en ce que** le canal d'alimentation de lubrifiant (7) se termine du côté extérieur dans une rainure de lubrifiant périphérique (8) de la bague extérieure (3).

4. Roulement à billes à contact oblique selon la revendication 3, **caractérisé en ce que** l'ouverture du côté extérieur du canal d'alimentation de lubrifiant (7) est disposée centralement dans la rainure de lubrifiant (8).

5. Roulement à billes à contact oblique selon la revendication 3 ou 4, **caractérisé en ce que** le centre de la rainure de lubrifiant (8) est espacé du centre de la bague extérieure (3) d'au maximum 20 % de la largeur de la bague extérieure (3).

6. Roulement à billes à contact oblique selon l'une quelconque des revendications 3 à 5, **caractérisé en ce que** la largeur (b) de la rainure de lubrifiant (8) vaut au moins 2 mm et au plus 60 % de la largeur (B) de la bague extérieure (3).

7. Roulement à billes à contact oblique selon l'une quelconque des revendications 3 à 6, **caractérisé en ce que** la profondeur (t) de la rainure de lubrifiant (8) vaut au moins 0,5 mm et au plus 1,5 fois la largeur (b) de la rainure de lubrifiant (8).

8. Roulement à billes à contact oblique selon l'une quelconque des revendications 3 à 7, **caractérisé en ce que** le plus petit diamètre (d) du canal d'alimentation en graisse de lubrification (7) vaut au moins 0,7 mm et au plus la moitié de la largeur (b) de la rainure de lubrifiant (8).

9. Roulement à billes à contact oblique selon l'une quelconque des revendications 3 à 8, **caractérisé en ce que** la rainure de lubrifiant (8) présente un contour en forme d'arc de cercle.

10. Roulement à billes à contact oblique selon l'une quelconque des revendications 1 à 9, **caractérisé en ce que** le canal d'alimentation de graisse de lubrification (7) présente une paroi qui n'est pas en forme d'enveloppe cylindrique.
